# DEMANDE DE BREVET EUROPEEN

(11) **EP 4 806 538 A1**
(43) Date de publication de la demande: **16.09.2026**
(21) Numéro de dépôt: 26159766.0
(22) Date de dépôt: 20.02.2026
(51) Int. Cl.: B01D 53/06, B01D 3/30, B01D 53/14, B01D 53/18, B01J 8/10

(54) **DISPOSITIF A LIT ROTATIF**

(30) Priorité: 10.03.2025 FR 2502343
(71) Demandeur: IFP Energies nouvelles, 92500 Rueil-Malmaison (FR)
(72) Inventeur: BEARD, Philippe, 92852 RUEIL-MALMAISON CEDEX (FR); LAABIDI, Samy, 92852 RUEIL-MALMAISON CEDEX (FR); MINIERE, Marine, 92852 RUEIL-MALMAISON CEDEX (FR); PENIN, Veronique, 92852 RUEIL-MALMAISON CEDEX (FR); STHEME DE JUBECOURT, Thibault, 92852 RUEIL-MALMAISON CEDEX (FR)
(74) Mandataire: IFP Energies nouvelles

(57) **Abrégé**

Il est proposé un dispositif à lit rotatif (50), comportant :
- une entrée (1) d'un premier fluide (F1),
- une entrée (2) d'un deuxième fluide (F2),
- une sortie (3) du premier fluide (F1),
- une sortie (4A) du deuxième fluide (F2),
- un contacteur rotatif (5), comprenant et un arbre de rotation (6) et un lit de garnissage (7) solidaire de l'arbre de rotation (6),
- un canal de circulation (8A) du deuxième fluide (F2), configuré pour faire circuler le deuxième fluide (F2) du lit de garnissage (7) vers la sortie (4A) du deuxième fluide (F2),
- un logement (27) de réception de l'arbre de rotation (6),
dans lequel le canal de circulation (8A) du deuxième fluide (F2) est disposé dans un espace radialement externe à l'arbre de rotation (6) et radialement interne au logement (27) de réception de l'arbre de rotation (6).

## Description

### Domaine technique

La présente invention se rapporte au domaine des équipements à contacteur rotatif. De tels équipements sont fréquemment utilisés en génie chimique, pour une grande variété de processus industriels.

Ces équipements permettent un transfert de matière, ou un transfert de chaleur, entre deux fluides mis en contact grâce à la dispersion réalisée par un contacteur rotatif.

### Technique antérieure

Les équipements à contacteur rotatif présentent des avantages par rapport à des équipements similaires à lit fixe. Grace à la force centrifuge subie par les fluides en raison de la rotation du lit du contacteur rotatif, l'efficacité du transfert entre les deux fluides est améliorée. Pour une même capacité de traitement, un équipement à contacteur rotatif est ainsi plus compact et plus léger qu'un équipement similaire à lit fixe. Une quantité de matériau moindre est donc employée pour sa fabrication, ce qui en fait généralement une solution plus économique et aussi plus écologique. De plus, l'implantation est plus facile, particulièrement sur des sites où la place disponible est limitée.

Certains procédés comme la captation de CO₂ dans les effluents de combustion d'une usine, ou d'une centrale électrique thermique, réclament une capacité de traitement bien supérieure à celle des équipements à contacteur rotatif classiques. Cette augmentation de capacité peut être obtenue en augmentant simplement la taille de l'équipement. Cependant, une simple augmentation de taille d'un équipement classique conduit généralement à une perte d'efficacité, et fait perdre à l'équipement certains de ses avantages.

Il existe donc un besoin de fournir des équipements à contacteur rotatif optimisés pour une grande capacité de traitement.

### Résumé

A cette fin, l'invention propose un dispositif à lit rotatif, comportant :
- au moins une entrée d'un premier fluide,
- au moins une première entrée/sortie d'un deuxième fluide,
- au moins une sortie du premier fluide,
- au moins une deuxième entrée/sortie du deuxième fluide,
- un contacteur rotatif, comprenant :
   -- un arbre de rotation,
   -- un lit de garnissage solidaire de l'arbre de rotation, configuré pour permettre un transfert de matière et/ou un transfert de chaleur entre le premier fluide et le deuxième fluide,
- au moins un canal de circulation du deuxième fluide, configuré pour faire circuler le deuxième fluide du lit de garnissage vers ladite au moins une deuxième entrée/sortie du deuxième fluide ou pour faire circuler le deuxième fluide de ladite au moins une deuxième entrée/sortie du deuxième fluide vers le lit de garnissage,
- au moins un logement de réception de l'arbre de rotation,
dans lequel ledit au moins un canal de circulation du deuxième fluide est disposé dans un espace radialement externe à l'arbre de rotation et radialement interne au logement de réception de l'arbre de rotation du contacteur rotatif.

En disposant le canal de circulation du deuxième fluide dans l'espace situé entre l'arbre de rotation lui-même et le logement dans lequel l'arbre de rotation est reçu, une grande surface de passage peut être offerte au deuxième fluide, ce qui permet de réduire la perte de charge subie par l'écoulement du deuxième fluide. La performance du dispositif à lit rotatif est ainsi améliorée. En particulier, la capacité de traitement est augmentée, pour un même encombrement du dispositif à lit rotatif.

Selon une variante, l'arbre de rotation est configuré pour pivoter par rapport au logement par l'intermédiaire d'au moins un roulement disposé dans le logement ,
et ledit au moins un roulement est disposé dans ledit au moins un canal de circulation du deuxième fluide, notamment afin de permettre la lubrification et/ou le refroidissement dudit roulement.

A noter que le roulement est un exemple de palier, et que, dans le présent texte, si cela est techniquement possible, quand on mentionne un roulement, on peut considérer tout autre palier de guidage.

Selon une autre variante,le logement comprend une première paroi formant logement de maintien d'un palier de guidage de l'arbre de rotation et une deuxième paroi radialement externe à la première paroi, et ledit au moins un canal de circulation du deuxième fluide est du logement et radialement interne à la deuxième paroi du logement, ce qui peut éviter ou tout au moins limiter la corrosion ou l'encrassement dudit roulement par ledit deuxième fluide).

Les caractéristiques listées dans les paragraphes suivant peuvent être mises en œuvre indépendamment les unes des autres ou selon toutes les combinaisons techniquement possibles :

Selon un mode de réalisation, la au moins une première entrée/sortie du deuxième fluide est une entrée, et la au moins une deuxième entrée/sortie du deuxième fluide est une sortie.

Autrement dit, le deuxième fluide est admis dans le dispositif à lit rotatif par la au moins une première entrée/sortie, et ressort du dispositif à lit rotatif par la au moins une deuxième entrée/sortie.

La au moins une première entrée/sortie est configurée pour recevoir un débit d'un deuxième fluide, et la au moins une deuxième entrée/sortie est configurée pour fournir un débit du deuxième fluide.

Le deuxième fluide circule dans le canal de circulation selon un premier sens de circulation.

Selon un autre mode de réalisation, la au moins une première entrée/sortie du deuxième fluide est une sortie, et la au moins une deuxième entrée/sortie du deuxième fluide est une entrée.

Selon un autre exemple de mise en œuvre du dispositif à lit rotatif, le lit de garnissage permet un transfert de matière d'au moins un certain composant du premier fluide vers le deuxième fluide.

Selon un exemple de mise en œuvre, le premier fluide est un liquide. Le deuxième fluide est un gaz.

Selon un autre exemple de mise en œuvre, le premier fluide est un liquide, et le deuxième fluide est également un liquide.

On comprend par « liquide » une phase entièrement liquide, ou contenant éventuellement aussi des particules solides ou des bulles de gaz en suspension. Ce terme englobe aussi une pluralité de phases (deux par exemple) liquides immiscibles entre elles.

La circulation du premier fluide et du deuxième fluide peut être à contre-courant, c'est-à-dire selon des directions sensiblement parallèles et des sens de déplacement opposés. Les deux fluides circulent dans le lit de garnissage du contacteur rotatif selon une direction radiale.

Le au moins un canal de circulation du deuxième fluide fait circuler le deuxième fluide depuis le lit de garnissage vers la au moins une deuxième entrée/sortie du deuxième fluide.

La circulation du premier fluide et du deuxième fluide peut être de type co-courant, c'est-à-dire selon des directions sensiblement parallèles et un même sens de circulation. Les deux fluides circulent dans le lit de garnissage du contacteur rotatif selon une direction radiale.

Dans ce cas, le au moins un canal de circulation du deuxième fluide fait circuler le deuxième fluide depuis la deuxième entrée/sortie du deuxième fluide vers le lit de garnissage.

La circulation du premier fluide et du deuxième fluide peut être de type à courants croisés, c'est-à-dire selon des directions de déplacement transverses.

Le premier fluide circule dans le lit de garnissage du contacteur rotatif selon une direction radiale. Le deuxième fluide circule dans le lit de garnissage selon une direction axiale.

L'arbre de rotation est un arbre plein.

Le au moins un canal de circulation du deuxième fluide est de forme cylindrique.

Le dispositif à lit rotatif comporte une enceinte formant un support de maintien du contacteur rotatif.

Le logement dans lequel l'arbre de rotation est disposé est formé dans l'enceinte.

L'enceinte est fixe.

L'enceinte est étanche.

Une partie du au moins un canal de circulation du deuxième fluide s'étend axialement entre le lit de garnissage et une première extrémité axiale de l'arbre de rotation.

Selon un mode de réalisation du dispositif à lit rotatif, le au moins un canal de circulation du deuxième fluide et l'arbre de rotation sont coaxiaux.

L'arbre de rotation est configuré pour pivoter par rapport à l'enceinte par l'intermédiaire d'au moins un palier de guidage.

Selon un mode de réalisation du dispositif à lit rotatif, l'arbre de rotation est configuré pour pivoter par rapport au logement par l'intermédiaire d'au moins un roulement disposé dans le logement,
et ledit au moins un roulement est disposé dans ledit au moins un canal de circulation du deuxième fluide.

En d'autres termes, le palier de guidage de l'arbre de rotation est par exemple un roulement.

Dans le cas où le palier de guidage est un roulement, les éléments mobiles du roulement peuvent être au contact du deuxième fluide lorsque le dispositif à lit rotatif est en fonctionnement. Le deuxième fluide contribue alors à refroidir le roulement, ce qui permet de réduire les contraintes thermiques sur les éléments du roulement. Pour certaines compositions chimiques du deuxième fluide, la circulation du deuxième fluide permet également de lubrifier le roulement, et ainsi d'améliorer sa fiabilité.

Selon un mode de réalisation du dispositif à lit rotatif, le roulement comprend :
- une bague intérieure dans laquelle l'arbre de rotation est disposé,
- une bague extérieure disposée dans le logement,
et une portion du au moins un canal de circulation s'étend radialement entre l'arbre de rotation et le logement.

Une portion du au moins un canal de circulation s'étend axialement entre une première extrémité axiale du au moins un roulement et une deuxième extrémité axiale du au moins un roulement, et s'étend radialement entre la bague intérieure et la bague extérieure du au moins un roulement.

Autrement dit, l'espace compris axialement entre une première extrémité axiale du au moins un roulement et une deuxième extrémité axiale du au moins un roulement, et compris radialement entre la bague intérieure et la bague extérieure, forme une portion du au moins un canal de circulation.

Selon un mode de réalisation du dispositif à lit rotatif, le logement comprend une première paroi formant logement de maintien d'un palier de guidage de l'arbre de rotation et une deuxième paroi radialement externe à la première paroi, et
ledit au moins un canal de circulation du deuxième fluide est disposé en partie dans un espace radialement externe à la première paroi du logement et radialement interne à la deuxième paroi du logement.

Autrement dit, dans ce mode de réalisation, une partie du canal de circulation du deuxième fluide contourne le palier de guidage de l'arbre de rotation.

Le deuxième fluide n'est ainsi pas en contact avec le palier de guidage, ce qui évite notamment une dégradation de ce palier de guidage lorsque le deuxième fluide est corrosif.

Selon un aspect du dispositif à lit rotatif, le contacteur rotatif comprend :
- un premier flasque et un deuxième flasque, le premier flasque et le deuxième flasque s'étendant transversalement à l'arbre de rotation à distance l'un de l'autre, le premier flasque étant solidaire de l'arbre de rotation,
- une chambre de mélange délimitée selon une direction axiale par les deux flasques,

le lit de garnissage étant disposé dans la chambre de mélange,
et le premier flasque comprend au moins un orifice de passage configuré pour permettre un passage de fluide entre le lit de garnissage et ledit au moins un canal de circulation du deuxième fluide.

La chambre de mélange est remplie par le lit de garnissage.

Les deux flasques forment un support, selon une direction axiale, pour le lit de garnissage.

Selon un aspect du dispositif à lit rotatif, la chambre de mélange comprend un bord radialement interne et un bord radialement externe, et est configurée pour permettre une circulation du premier fluide depuis le bord radialement interne vers le bord radialement externe.

Selon un mode de réalisation, la chambre de mélange est configurée pour permettre une circulation du deuxième fluide depuis le bord radialement externe vers le bord radialement interne.

Selon un autre mode de réalisation, la chambre de mélange est configurée pour permettre une circulation du deuxième fluide depuis le bord radialement interne vers le bord radialement externe.

Le au moins un orifice de passage du premier flasque débouche dans le au moins un canal de circulation du deuxième fluide.

Un bord radialement interne du au moins un orifice de passage du premier flasque est adjacent à l'arbre de rotation.

Le premier flasque comprend un ensemble d'orifices de passage.

Les orifices de passage du premier flasque peuvent être régulièrement espacés.

Les orifices de passage du premier flasque sont disposés à la même distance du centre du premier flasque.

Les orifices de passage du premier flasque peuvent avoir la même forme.

Les orifices de passage du premier flasque sont délimités latéralement par deux portions rectilignes.

Les orifices de passage du premier flasque sont délimités radialement par deux portions en arc de cercle. Les deux portions en arc de cercle ont le même centre, et ce centre coïncide avec le centre du premier flasque.

Chaque portion rectiligne s'étend radialement vers le centre du premier flasque.

Selon un mode de réalisation, le dispositif à lit rotatif comporte :
- une troisième entrée/sortie du deuxième fluide,
- un deuxième canal de circulation configuré pour faire circuler le deuxième fluide du lit de garnissage vers la troisième entrée/sortie du deuxième fluide, ou pour faire circuler le deuxième fluide de la troisième entrée/sortie vers le lit de garnissage.

La présence d'un deuxième canal de circulation permet d'augmenter la section de passage du deuxième fluide, et donc de réduire encore la perte de charge. Pour un même encombrement, le débit maximal du dispositif à lit rotatif peut être augmenté.

La troisième entrée/sortie du deuxième fluide joue le même rôle que la deuxième entrée/sortie.

En d'autres termes, selon un mode de réalisation la deuxième entrée/sortie et la troisième entrée/sortie sont conjointement des entrées du deuxième fluide.

Selon un autre mode de réalisation, la deuxième entrée/sortie et la troisième entrée/sortie sont conjointement des sorties du deuxième fluide.

Selon un mode de réalisation du dispositif à lit rotatif,
le deuxième flasque comprend au moins un orifice de passage configuré pour permettre un passage de fluide entre le lit de garnissage et le deuxième canal de circulation du deuxième fluide.

Le deuxième canal de circulation du deuxième fluide est de forme cylindrique.

Le premier canal de circulation et le deuxième canal de circulation sont disposés selon une direction axiale de part et d'autre de la chambre de mélange.

Le premier canal de circulation et le deuxième canal de circulation sont coaxiaux.

Selon un mode de réalisation du dispositif à lit rotatif, l'arbre de rotation est configuré pour pivoter par rapport à l'enceinte par l'intermédiaire d'un unique palier de guidage. Cet unique palier de guidage peut être un roulement.

Selon un mode de réalisation, le dispositif à lit rotatif comporte un deuxième logement de réception de l'arbre de rotation,
et le deuxième canal de circulation du deuxième fluide est disposé dans un espace radialement externe à l'arbre de rotation et radialement interne au deuxième logement de réception de l'arbre de rotation du contacteur rotatif.

Selon un mode de réalisation, l'arbre de rotation est configuré pour pivoter par rapport à l'enceinte par l'intermédiaire d'au moins un premier palier de guidage et un deuxième palier de guidage.

Selon un mode de réalisation du dispositif à lit rotatif, l'arbre de rotation est configuré pour pivoter par rapport au deuxième logement par l'intermédiaire d'un deuxième roulement disposé dans le deuxième logement,
et le deuxième roulement est disposé dans le deuxième canal de circulation du deuxième fluide.

En d'autres termes, le deuxième palier de guidage de l'arbre de rotation peut être un roulement.

Le deuxième roulement permet d'améliorer le guidage de l'arbre de rotation.

De même, le logement dans lequel le deuxième roulement est disposé, est formé dans l'enceinte.

Selon un mode de réalisation du dispositif à lit rotatif, le premier roulement et le deuxième roulement sont disposés selon une direction axiale de part et d'autre de la chambre de mélange.

Le dispositif à lit rotatif peut ainsi présenter une symétrie par rapport à un plan transverse à l'axe de l'arbre de rotation. L'écoulement du deuxième fluide est facilité.

Le deuxième roulement et le premier roulement peuvent être identiques.

Selon un aspect du dispositif à lit rotatif, le deuxième roulement comprend :
- une bague intérieure dans laquelle l'arbre de rotation est disposé,
- une bague extérieure disposée dans le deuxième logement,
et une portion du deuxième canal de circulation s'étend radialement entre l'arbre de rotation et le deuxième logement.

Le deuxième canal de sortie du deuxième fluide est coaxial avec l'arbre de rotation.

Selon un mode de réalisation, le premier canal de circulation du deuxième fluide et le deuxième canal de circulation du deuxième fluide sont co-axiaux.

Selon un mode de réalisation du dispositif à lit rotatif, le deuxième logement comprend une première paroi formant logement de maintien d'un deuxième palier de guidage de l'arbre de rotation et une deuxième paroi radialement externe à la première paroi, et
le deuxième canal de circulation du deuxième fluide est disposé en partie dans un espace radialement externe à la première paroi du deuxième logement et radialement interne à la deuxième paroi du deuxième logement.

Comme précédemment, une partie du deuxième canal de circulation du deuxième fluide contourne le deuxième palier de guidage de l'arbre de rotation.

Le deuxième palier de guidage n'est ainsi pas en contact avec le deuxième fluide, ce qui évite un risque de dégradation lorsque le deuxième fluide est corrosif.

Le premier canal de circulation du deuxième fluide et le deuxième canal de circulation du deuxième fluide sont en communication fluidique.

Selon un mode de réalisation du dispositif à lit rotatif, le deuxième flasque est solidaire de l'arbre de rotation.

Le au moins un orifice de passage du deuxième flasque débouche dans le deuxième canal de circulation du deuxième fluide.

Un bord radialement interne du au moins un orifice de passage du deuxième flasque est adjacent à l'arbre de rotation.

Les orifices de passage du deuxième flasque peuvent avoir la même forme que les orifices de passage du premier flasque.

Les orifices de passage du deuxième flasque peuvent avoir la même surface de passage que les orifices de passage du premier flasque.

selon un mode de réalisation du dispositif à lit rotatif, le contacteur rotatif comprend :
- un premier flasque et un deuxième flasque, le premier flasque et le deuxième flasque s'étendant transversalement à l'arbre de rotation à distance l'un de l'autre, le premier flasque étant solidaire de l'arbre de rotation,
- une chambre de mélange délimitée selon une direction axiale par les deux flasques,
le lit de garnissage étant disposé dans la chambre de mélange, et :
- le premier flasque comprend au moins un orifice de passage configuré pour permettre un passage de fluide entre la au moins une première entrée/sortie du deuxième fluide et le lit de garnissage, et
- le deuxième flasque comprend au moins un orifice de passage configuré pour permettre un passage de fluide entre le lit de garnissage et ledit au moins un canal de circulation du deuxième fluide.

L'ensemble d'orifices de passage du premier flasque est disposé sur une première surface latérale du lit de garnissage. L'ensemble d'orifices de passage du deuxième flasque est disposé sur une deuxième surface latérale du lit de garnissage, opposé à la première surface latérale.

Selon un mode de réalisation du dispositif à lit rotatif, le contacteur rotatif comprend :
- un arbre de rotation,
- un premier lit de garnissage solidaire de l'arbre de rotation, configuré pour permettre un transfert de matière ou un transfert de chaleur entre le premier fluide et le deuxième fluide,
- un deuxième lit de garnissage solidaire de l'arbre de rotation, configuré pour permettre un transfert de matière ou un transfert de chaleur entre le premier fluide et le deuxième fluide, une sortie du premier lit de garnissage étant configurée pour fournir un débit du premier fluide au deuxième lit de garnissage,

une sortie du deuxième lit de garnissage étant configurée pour fournir un débit du deuxième fluide au premier lit de garnissage,
   - un premier canal de circulation du deuxième fluide, configuré pour faire circuler le deuxième fluide du premier lit de garnissage vers la deuxième entrée/sortie du deuxième fluide,
   - un deuxième canal de circulation du deuxième fluide, configuré pour faire circuler le deuxième fluide du deuxième lit de garnissage vers le premier lit de garnissage,
   - au moins un logement de réception de l'arbre de rotation,
dans lequel ledit au moins un deuxième canal de circulation du deuxième fluide est disposé dans un espace radialement externe à l'arbre de rotation et radialement interne au logement de réception de l'arbre de rotation du contacteur rotatif.

Selon un mode de réalisation, le dispositif à lit rotatif comporte au moins un distributeur du premier fluide, configuré pour faire passer le premier fluide de l'entrée du premier fluide au lit de garnissage, et une portion dudit au moins un distributeur du premier fluide est disposée à l'intérieur de l'arbre de rotation du contacteur rotatif.

Selon un mode de réalisation du dispositif à lit rotatif, le au moins un distributeur comprend une portion tubulaire, et
la portion tubulaire dudit au moins un distributeur et l'arbre de rotation du contacteur rotatif sont coaxiaux.

Le au moins un distributeur comprend au moins un orifice de passage du premier fluide.

Le au moins un distributeur comprend un ensemble d'orifices de passage du premier fluide.

Le au moins un distributeur comprend une portion tubulaire.

Le au moins un orifice de passage du premier fluide est formé dans une paroi latérale de la portion tubulaire.

Le au moins un orifice de passage est disposé en vis-à-vis du lit de garnissage selon une direction radiale.

Les orifices de passage sont décalés axialement le long de la portion tubulaire du distributeur.

Les orifices de passage sont décalés angulairement sur une partie de la surface latérale de la portion tubulaire.

Selon un exemple de réalisation, l'extrémité de la portion tubulaire du au moins un distributeur du premier fluide est fermée.

Selon un autre exemple de réalisation, l'extrémité de la portion tubulaire du au moins un distributeur du premier fluide est ouverte.

Le dispositif à lit rotatif peut comprendre deux distributeurs.

Les deux distributeurs sont par exemple disposés parallèlement l'un à l'autre à l'intérieur du contacteur rotatif.

Selon un autre exemple de mise en œuvre du dispositif à lit rotatif, l'arbre de rotation est orienté selon une direction horizontale.

La au moins une première entrée/sortie du deuxième fluide est disposée sur une face latérale de l'enceinte.

La sortie du premier fluide et la au moins une deuxième entrée/sortie du deuxième fluide s'étendent dans des plans perpendiculaires.

Selon un mode de réalisation, la sortie du premier fluide est disposée dans une portion inférieure de l'enceinte.

Une portion inférieure de l'enceinte forme un volume de collecte du premier fluide.

L'entrée du deuxième fluide est disposée dans une portion de l'enceinte en vis d'un flasque du contacteur rotatif.

Selon un exemple de mise en œuvre du dispositif à lit rotatif, l'arbre de rotation est orienté selon une direction verticale.

L'arbre de rotation peut former un angle quelconque avec l'axe vertical.

Le dispositif à lit rotatif comprend un premier joint d'étanchéité disposé selon une direction axiale entre le premier flasque du contacteur rotatif et l'enceinte.

Le premier joint d'étanchéité entoure le au moins un canal de circulation.

Le dispositif à lit rotatif comprend un deuxième joint d'étanchéité disposé selon une direction axiale entre le deuxième flasque du contacteur rotatif et l'enceinte.

Le deuxième joint d'étanchéité entoure le deuxième canal de sortie.

Selon un mode de réalisation, le dispositif à lit rotatif comprend un troisième joint d'étanchéité disposé radialement entre une portion de l'arbre de rotation et une partie de l'enceinte.

L'invention a également pour objet tout procédé de mise en œuvre du dispositif à lit rotatif décrit plus haut, où l'on transfère de la matière et/ou de la chaleur d'un des deux fluides vers l'autre fluide, les deux fluides étant notamment tous deux liquides (ou majoritairement liquides même s'ils peuvent contenir une phase/des particules solides ou des bulles de gaz en suspension), ou l'un étant liquide et l'autre gazeux.

Le dispositif selon l'invention a ainsi de multiples applications, dont tout type d'extractions liquide/liquide.

De façon non limitative, on peut notamment citer deux applications pour le dispositif selon la présente invention :
Une application qui intéresse l'invention, sans que l'invention s'y limite, concerne la désacidification des effluents gazeux tels que par exemple le gaz naturel, les gaz de synthèse, les fumées de combustion, les gaz de raffinerie, les gaz obtenus en queue du procédé Claus, les gaz de fermentation de biomasse. La désacidification est réalisée par lavage par une solution liquide absorbante, avec transfert du composé acide depuis l'effluent gazeux vers cette solution absorbante. La solution absorbante permet d'absorber les composés acides présents dans l'effluent gazeux, comme notamment l'hydrogène sulfuré H2S, les mercaptans, le dioxyde de carbone CO2, le dioxyde de soufre SO2, l'oxysulfure de carbone COS et le disulfure de carbone CS2. Les caractéristiques physico-chimiques de cette solution absorbante sont liées à la nature du gaz à traiter : spécification attendue sur le gaz traité, élimination sélective d'un composé acide, stabilité thermique et chimique de la solution vis à vis des différents composés présents dans l'effluent gazeux à traiter. On s'intéresse ici plus particulièrement au traitement d'effluents gazeux en vue de capter le dioxyde de carbone CO2 qu'ils contiennent, le captage du CO2 par solvant étant l'une des façons de réduire les émissions industrielles de CO2 et de limiter l'accumulation de ce gaz à effet de serre dans l'atmosphère.

L'autre application, liée à la précédente, concerne la régénération de ces liquides absorbants, par mise en contact avec, par exemple, un gaz de strippage qui va embarquer les composés acides relargués par la solution, notamment sous l'effet d'un apport thermique, avec cette fois un transfert de matière depuis la solution liquide vers un gaz ou mélange de gaz.

### Brève description des dessins

D'autres caractéristiques, détails et avantages apparaîtront à la lecture de la description détaillée ci-après, et à l'analyse des dessins annexés, sur lesquels :
[Fig. 1] est une représentation schématique, de côté et en coupe, d'un dispositif à lit rotatif selon un premier mode de réalisation,
[Fig. 2] est une représentation schématique, de côté et en coupe, d'un dispositif à lit rotatif selon un deuxième mode de réalisation,
[Fig. 3] est une représentation schématique, de côté et en coupe, d'un dispositif à lit rotatif selon un troisième mode de réalisation,
[Fig. 4] est une représentation schématique, de côté et en coupe, d'un dispositif à lit rotatif selon un quatrième mode de réalisation,
[Fig. 5] est une représentation schématique, de côté et en coupe, du contacteur rotatif d'une première variante du dispositif à lit rotatif des figures 1 à 3,
[Fig. 6] est une représentation schématique, de côté et en coupe, d'un dispositif à lit rotatif selon un cinquième mode de réalisation,
[Fig. 7] est une représentation schématique, de côté et en coupe, d'un dispositif à lit rotatif selon un cinquième mode de réalisation,
[Fig. 8] est une représentation schématique, de côté et en coupe, d'un dispositif à lit rotatif selon un sixième mode de réalisation.
[Fig. 9] et [Fig. 10] sont des variantes supplémentaires du dispositif à lit rotatif selon l'invention.

### Description des modes de réalisation

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations.

Quand il est précisé qu'un dispositif comporte un élément donné, cela n'exclut pas la présence d'autres éléments dans ce dispositif.

Sur les différentes figures, l'axe Z représente la direction verticale, la flèche pointant vers le haut.

L'axe X représente un axe horizontal.

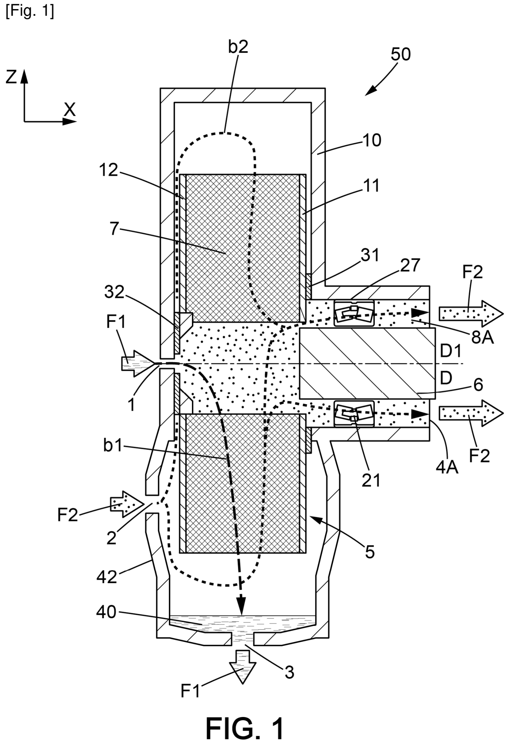

On a représenté schématiquement sur la figure 1 un dispositif à lit rotatif 50 selon un premier mode de réalisation.

Le dispositif à lit rotatif 50 comporte :
- au moins une entrée 1 d'un premier fluide F1,
- au moins une première entrée/sortie 2 d'un deuxième fluide F2,
- au moins une sortie 3 du premier fluide F1,
- au moins une deuxième entrée/sortie 4A du deuxième fluide F2,
- un contacteur rotatif 5.

Le contacteur rotatif 5 comprend :
- un arbre de rotation 6,
- un lit de garnissage 7 solidaire de l'arbre de rotation 6, configuré pour permettre un transfert de matière ou un transfert de chaleur entre le premier fluide F1 et le deuxième fluide F2.

Le dispositif à lit rotatif 50 comporte au moins un canal de circulation 8A du deuxième fluide F2, configuré pour faire circuler le deuxième fluide F2 du lit de garnissage 7 vers ladite au moins une deuxième entrée/sortie 4A du deuxième fluide F2 ou pour faire circuler le deuxième fluide F2 de ladite au moins une deuxième entrée/sortie 4A du deuxième fluide F2 vers le lit de garnissage 7,

Le dispositif à lit rotatif 50 comporte au moins un logement 27 de réception de l'arbre de rotation 6,
et ledit au moins un canal de circulation 8A du deuxième fluide F2 est disposé dans un espace radialement externe à l'arbre de rotation 6 et radialement interne au logement 27 de réception de l'arbre de rotation 6 du contacteur rotatif 5.

On entend par 'radialement externe' l'espace entourant l'arbre de rotation, c'est-à-dire la zone située à une plus grande distance de l'axe de rotation que la surface de l'arbre de rotation. On entend par 'radialement interne' l'espace entouré par le logement de réception, c'est-à-dire la zone située à une plus faible distance de l'axe de rotation que la surface du logement de réception.

En disposant le canal de circulation 8A du deuxième fluide F2 dans l'espace situé entre l'arbre de rotation 6 lui-même et le logement 27 dans lequel l'arbre de rotation 6 est reçu, une grande surface de passage peut être offerte au deuxième fluide F2. La perte de charge subie par l'écoulement du deuxième fluide F2 peut ainsi être réduite. La performance du dispositif à lit rotatif 50 est améliorée. En particulier, la capacité de traitement est augmentée, pour un même encombrement du dispositif à lit rotatif 50.

Selon un premier mode de réalisation, illustré sur la figure 1, la au moins une première entrée/sortie 2 du deuxième fluide F2 est une entrée, et la au moins une deuxième entrée/sortie 4A du deuxième fluide F2 est une sortie.

Autrement dit, le deuxième fluide F2 est admis dans le dispositif à lit rotatif 50 par la au moins une première entrée/sortie 2, et ressort du dispositif à lit rotatif 50 par la au moins une deuxième entrée/sortie 4A. Le canal de circulation 8A est dans ce cas un canal de sortie du deuxième fluide F2.

La au moins une première entrée/sortie 2 est ainsi configurée pour recevoir un débit d'un deuxième fluide F2, et la au moins une deuxième entrée/sortie 4A est configurée pour fournir un débit du deuxième fluide F2.

Le deuxième fluide F2 circule dans le canal de circulation 8A selon un premier sens de circulation.

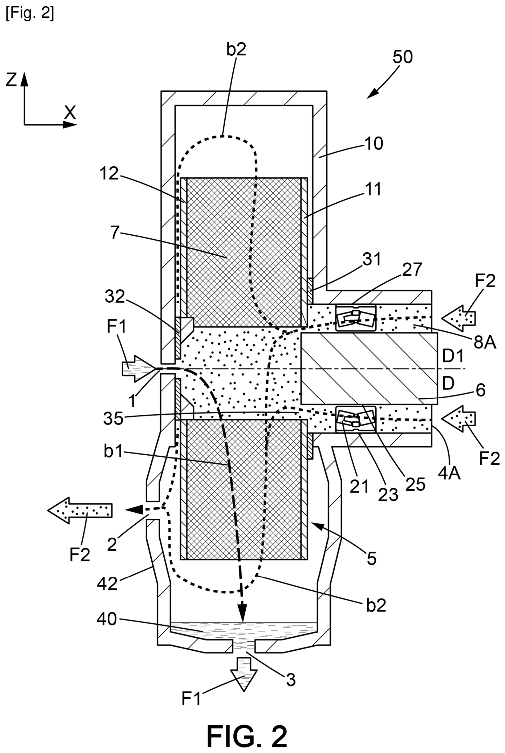

La figure 2 représente un deuxième mode de réalisation du dispositif à lit rotatif 50. Selon ce deuxième mode de réalisation, la au moins une première entrée/sortie 2 du deuxième fluide F2 est une sortie, et la au moins une deuxième entrée/sortie 4A du deuxième fluide F2 est une entrée.

Autrement dit, le deuxième fluide F2 est admis dans le dispositif à lit rotatif 50 par la au moins une deuxième entrée/sortie 4A, et ressort du dispositif à lit rotatif 50 par la au moins une première entrée/sortie 2. Le canal de circulation 8A est, selon ce mode de réalisation, un canal d'entrée du deuxième fluide F2.

La au moins une deuxième entrée/sortie 4A est ainsi configurée pour recevoir un débit du deuxième fluide F2, et la au moins une première entrée/sortie 2 est configurée pour fournir un débit du deuxième fluide F2.

Le deuxième fluide F2 circule dans le canal de circulation 8A selon un deuxième sens de circulation, opposé au premier sens de circulation.

La au moins une entrée 1 est configurée pour recevoir un débit d'un premier fluide F1.

La au moins une sortie 3 est configurée pour fournir un débit du premier fluide F1.

Le premier fluide F1 et le deuxième fluide F2 sont en contact l'un avec l'autre en circulant dans le lit de garnissage 7 du contacteur rotatif 5.

La force centrifuge générée par la rotation du contacteur rotatif 5 permet de forcer la migration du premier fluide F1 depuis la partie radialement interne du lit de garnissage 7 vers la partie radialement externe du lit de garnissage 7. La force centrifuge permet d'améliorer l'efficacité du transfert entre les deux fluides F1, F2, ce qui augmente la capacité de traitement, ou permet de réduire la quantité de lit de garnissage utilisé dans le contacteur rotatif.

Selon un exemple de mise en œuvre du dispositif à lit rotatif 50, le lit de garnissage 7 permet un transfert de matière d'au moins un certain composant du deuxième fluide F2 vers le premier fluide F1.

Selon un autre exemple de mise en œuvre du dispositif à lit rotatif 50, le lit de garnissage 7 permet un transfert de matière d'au moins un certain composant du premier fluide F1 vers le deuxième fluide F2.

Dans le cas d'un transfert de matière, la composition chimique du premier fluide F1 évolue en circulant dans le lit de garnissage 7. De même, la composition chimique du deuxième fluide F2 évolue en circulant dans le lit de garnissage 7.

Ainsi, la composition chimique du premier fluide F1 à la sortie 3 du dispositif à lit rotatif 50 est différente de la composition chimique du premier fluide F1 à l'entrée 1 du dispositif à lit rotatif 50.

De la même manière, la composition chimique du deuxième fluide F2 à la sortie 4A du dispositif à lit rotatif 50 est différente de la composition chimique du deuxième fluide F2 à l'entrée 2 du dispositif à lit rotatif 50.

Dans le cas d'un transfert de chaleur, la température du premier fluide F1 évolue en circulant dans le lit de garnissage 7. La température en sortie diffère de la température en entrée. De même, la température du deuxième fluide F2 évolue en circulant dans le lit de garnissage 7.

Le premier fluide F1 peut comprendre des particules. Les particules peuvent être présentes dans le premier fluide F1 en entrée du dispositif à lit rotatif 50, en sortie du dispositif à lit rotatif 50, ou à la fois en entrée et en sortie du dispositif à lit rotatif 50.

De même, le deuxième fluide F2 peut aussi comprendre des particules. Comme précédemment, les particules peuvent être présentes dans le deuxième fluide F2 en entrée du dispositif à lit rotatif 50, en sortie, ou à la fois en entrée et en sortie du dispositif à lit rotatif 50.

Selon l'exemple illustré, le premier fluide F1 est un liquide. Le deuxième fluide F2 est un gaz.

Le liquide peut absorber un ou des composants chimiques contenus dans le gaz. Un exemple d'application est de la captation de CO₂ sur les fumées d'une usine.

Un autre exemple d'application est l'élimination du sulfure d'hydrogène dans un effluent gazeux. Le liquide forme une solution absorbante.

Dans le cas de la captation de CO₂, le deuxième fluide F2 est un mélange gazeux contenant du CO₂. (dioxyde de carbone)

Le premier fluide F1 est par exemple une solution liquide comportant en tout ou partie un composé réactif envers le CO2, permettant de l'absorber. Ce ou ces composés réactifs peuvent être purs, dilués et sous forme de liquide ionique. Ils sont choisis parmi le groupe constitué par les amines, les alcanolamines, les azoles, les cétones, les oxames, les lactames, les enoles, les alcools, les thiols, les acides aminés, les sels alcalins d'acides aminés, les amides, les urées, les phosphates, les carbonates, les borates de métaux alcalins.

La liste suivante fournit quelques exemples de composés réactifs utilisables : la N,N,4-triméthy1-1-pipérazinepropanamine ; la 1,2-Bis(diméthylaminoéthoxy)éthane ; la 2-[(2-hydroxyéthyl)amino]-2-méthy1-1-propanol ; la 2-[(2-hydroxypropyl)amino]-2-méthy1-1-propanol.

La solution liquide peut comporter une fraction massique du composé azoté comprise entre 10% et 100% en poids, et une fraction massique d'eau comprise entre 0% et 90% en poids, la somme des fractions massiques d'eau et du composé azoté étant supérieure ou égale à 50%.

Le deuxième fluide F2 est brut en entrée du dispositif à lit rotatif, et est purifié en sortie. Le premier fluide F1 est pauvre en entrée du dispositif à lit rotatif, et enrichi en sortie.

Selon un autre exemple de mise en œuvre, non représenté, le premier fluide F1 est un liquide, et le deuxième fluide F2 est également un liquide.

Différents types de circulation du premier fluide F1 et du deuxième fluide F2 sont possibles.

Sur les différentes figures, la ligne pointillée désignée par le signe b1 schématise le parcours du premier fluide F1.

La ligne pointillée désignée par le signe b2 schématise le parcours du deuxième fluide F2. Les flèches schématisent le sens de parcours.

La circulation du premier fluide F1 et du deuxième fluide F2 peut être à contre-courant, c'est-à-dire selon des directions sensiblement parallèles et des sens de déplacement opposés. Les deux fluides F1, F2 circulent dans le lit de garnissage 7 du contacteur rotatif 5 selon une direction radiale.

Comme représenté sur la figure 1, la première entrée/sortie 2 est dans ce cas une entrée, et la deuxième entrée/sortie 4A est une sortie.

Le au moins un canal de circulation 8A du deuxième fluide F2 fait circuler le deuxième fluide F2 depuis le lit de garnissage 7 vers la au moins une deuxième entrée/sortie 4A du deuxième fluide F2.

Selon un autre mode de réalisation, illustré sur la figure 2, la circulation du premier fluide F1 et du deuxième fluide F2 peut être de type co-courant, c'est-à-dire selon des directions sensiblement parallèles et selon un même sens de circulation.

Les deux fluides F1, F2 circulent dans le lit de garnissage 7 du contacteur rotatif 5 selon une direction radiale.

Dans ce cas, la deuxième entrée/sortie 4A est une entrée et la première entrée/sortie 2 est une sortie.

Le au moins un canal de circulation 8A du deuxième fluide F2 fait dans ce cas circuler le deuxième fluide F2 depuis la deuxième entrée/sortie 4A du deuxième fluide F2 vers le lit de garnissage 7.

Le deuxième mode de réalisation diffère ainsi du premier mode de réalisation par le sens de circulation du deuxième fluide F2.

La circulation du premier fluide F1 reste inchangée entre les deux modes de réalisation.

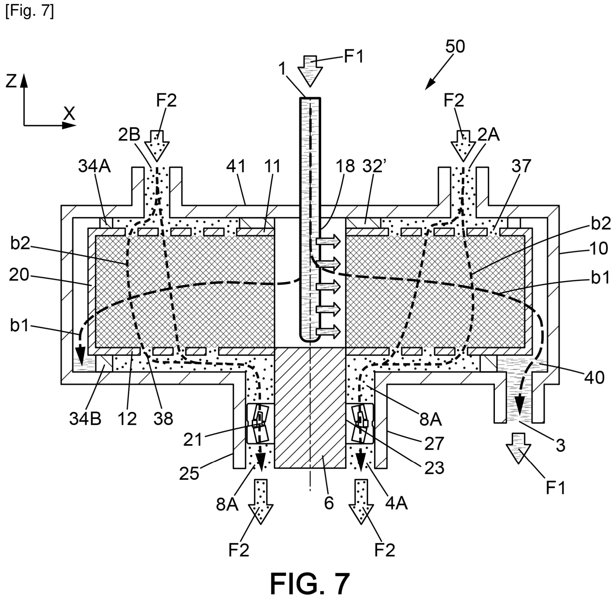

Selon un autre mode de réalisation, illustré sur la figure 7, la circulation du premier fluide F1 et du deuxième fluide F2 peut être de type à courants croisés, c'est-à-dire selon des directions de déplacement transverses.

Le premier fluide F1 circule dans le lit de garnissage 7 du contacteur rotatif 5 selon une direction radiale, c'est-à-dire transverse à la direction de l'axe de l'arbre de rotation 6.

Le deuxième fluide F2 circule dans le lit de garnissage 7 selon une direction axiale, c'est-à-dire parallèle à la direction de l'axe de l'arbre de rotation 6.

Dans ce mode de réalisation, la première entrée/sortie 2 est une entrée et la deuxième entrée/sortie 4A une sortie.

L'arbre de rotation 6 est un arbre plein.

L'arbre de rotation 6 s'étend selon un axe D.

L'arbre de rotation 6 comprend une surface latérale 6L. Cette surface latérale 6L est une surface latérale externe.

Le au moins un canal de circulation 8A du deuxième fluide F2 est de forme cylindrique. Le au moins un canal de circulation 8A du deuxième fluide F2 s'étend selon un axe D1. Le au moins un canal de circulation 8A du deuxième fluide F2 et l'arbre de rotation 6 sont ici coaxiaux.

L'espace compris entre la surface latérale 6L de l'arbre de rotation 6 et la surface interne du logement 27 est de forme annulaire.

L'espace compris entre la surface latérale 6L de l'arbre de rotation 6 et la surface interne du logement 27 forme une portion du au moins un canal de circulation 8A.

Le au moins un canal de circulation 8A entoure l'arbre de rotation 6.

La au moins une deuxième entrée/sortie 4A du deuxième fluide F2 forme une extrémité du au moins un canal de circulation 8A du deuxième fluide F2.

Le dispositif à lit rotatif 50 comporte une enceinte 10 formant un support de maintien du contacteur rotatif 5.

L'enceinte 10 forme un bâti par rapport auquel le contacteur rotatif 5 peut pivoter.

L'enceinte 10 est fixe.

L'enceinte 10 forme un volume de réception du contacteur rotatif 5.

Le premier fluide F1 et le deuxième fluide F2 circulent à l'intérieur de l'enceinte 10.

L'enceinte 10 est étanche.

L'enceinte 10 contient le premier fluide F1 et le deuxième fluide F2.

L'enceinte 10 est rigide.

On entend par rigide que l'enceinte 10 subit seulement des déformations élastiques, donc réversibles, lors d'une utilisation nominale du dispositif à lit rotatif 50.

Le logement 27, dans lequel l'arbre de rotation 6 est disposé, est formé dans l'enceinte 10.

La surface latérale 6L de l'arbre de rotation 6 est en contact avec le deuxième fluide F2. La surface latérale interne du logement 27 est en contact avec le deuxième fluide F2.

Une partie du au moins un canal de circulation 8A du deuxième fluide F2 s'étend axialement entre le lit de garnissage 7 et une première extrémité axiale de l'arbre de rotation 6.

L'arbre de rotation 6 est configuré pour pivoter par rapport à l'enceinte 10 par l'intermédiaire d'au moins un palier de guidage.

Selon les exemples de réalisation illustrés sur les figures 1 à 7, l'arbre de rotation 6 est configuré pour pivoter par rapport au logement 27 par l'intermédiaire d'au moins un roulement 21 disposé dans le logement 27,
et ledit au moins un roulement 21 est disposé dans ledit au moins un canal de circulation 8A du deuxième fluide F2.

Le au moins un palier de guidage de l'arbre de rotation 6 est ainsi un roulement.

Le roulement peut notamment être un roulement à billes, ou un roulement à rouleaux. Le roulement peut comporter deux rangées de billes, ou deux rangées de rouleaux.

Les éléments mobiles du roulement 21 sont au contact du deuxième fluide F2 lorsque le dispositif à lit rotatif 50 est en fonctionnement. Le deuxième fluide F2 contribue à refroidir le roulement 21, ce qui permet de réduire les contraintes thermiques sur les éléments du roulement 21. Pour certaines compositions chimiques du deuxième fluide F2, la circulation du deuxième fluide F2 permet également de lubrifier le roulement 21, et ainsi d'améliorer sa fiabilité.

Le roulement 21 peut être un roulement à billes, ou un roulement à rouleaux. Le roulement 21 peut comporter deux rangées de billes, ou deux rangées de rouleaux.

Le roulement 21 comprend :
- une bague intérieure 23 dans laquelle l'arbre de rotation 6 est disposé,
- une bague extérieure 25 disposée dans le logement 27,
et une portion du au moins un canal de circulation 8A s'étend radialement entre l'arbre de rotation 6 et le logement 27.

La bague intérieure 23 du roulement 21 est fixe par rapport à l'arbre de rotation 6. La bague extérieure 25 du roulement 21 est fixe par rapport à la paroi interne du logement 27 de l'enceinte 10.

Une portion du au moins un canal de circulation 8A s'étend axialement entre une première extrémité axiale du au moins un roulement 21 et une deuxième extrémité axiale du au moins un roulement 21, et s'étend radialement entre la bague intérieure 23 et la bague extérieure 25 du au moins un roulement 21.

Autrement dit, l'espace compris axialement entre une première extrémité axiale du au moins un roulement 21 et une deuxième extrémité axiale du au moins un roulement 21, et compris radialement entre la bague intérieure 23 et la bague extérieure 25, forme une portion du au moins un canal de circulation 8A.

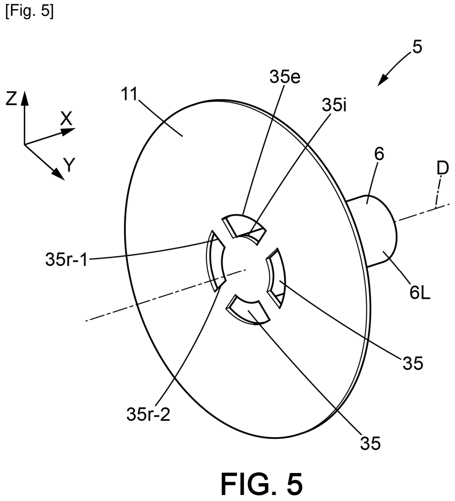

Selon les modes de réalisation des figures 1 à 4 ainsi que selon le mode de réalisation de la figure 5, le contacteur rotatif 5 comprend :
- un premier flasque 11 et un deuxième flasque 12, le premier flasque 11 et le deuxième flasque 12 s'étendant transversalement à l'arbre de rotation 6 à distance l'un de l'autre, le premier flasque 11 étant solidaire de l'arbre de rotation 6,
- une chambre de mélange 13 délimitée selon une direction axiale par les deux flasques 11,12,

le lit de garnissage 7 étant disposé dans la chambre de mélange 13,
et le premier flasque 11 comprend au moins un orifice de passage 35 configuré pour permettre un passage de fluide entre le lit de garnissage 7 et ledit au moins un canal de circulation 8A du deuxième fluide F2.

La chambre de mélange 13 est remplie par le lit de garnissage 7.

Les deux flasques 11,12 forment un support, selon une direction axiale, pour le lit de garnissage 7.

Chaque flasque 11,12 a la forme d'un disque évidé en son centre. L'évidement est de forme circulaire et permet notamment l'insertion de l'arbre de rotation 6.

Les deux flasques 11,12 sont décalés le long de l'axe de l'arbre de rotation 6. Le volume délimité par les deux flasques 11,12 est rempli par le lit de garnissage 7.

Chaque flasque 11,12 comprend un dispositif de maintien radial du lit de garnissage 7. Le dispositif de maintien résiste aux efforts centrifuges s'exerçant sur le lit garnissage 7. Ce dispositif de maintien n'a pas été représenté.

Le lit de garnissage 7 est ainsi fixe par rapport aux flasques 11, 12.

Selon notamment les modes de réalisation des figures 1 à 4, le au moins un orifice de passage 35 du premier flasque 11 débouche dans le au moins un canal de circulation 8A du deuxième fluide F2.

Le au moins un orifice de passage 35 du premier flasque 11 est en vis-à-vis, selon une direction axiale, avec le au moins un canal de circulation 8A du deuxième fluide F2.

La chambre de mélange 13 comprend un bord radialement interne 13-i et un bord radialement externe 13-e, et est configurée pour permettre :
- une circulation du premier fluide F1 depuis le bord radialement interne 13-i vers le bord radialement externe 13-e.

La force centrifuge générée par la rotation du contacteur rotatif 5 tend à faire passer le liquide F1 de la région proche de l'axe D de l'arbre de rotation 6 à la périphérie externe du lit de garnissage 7.

Le bord radialement interne 13-i est le bord le plus proche de l'axe D de l'arbre de rotation 6. Le bord radialement externe 13-e est le bord le plus éloigné de l'axe D de l'arbre de rotation 6.

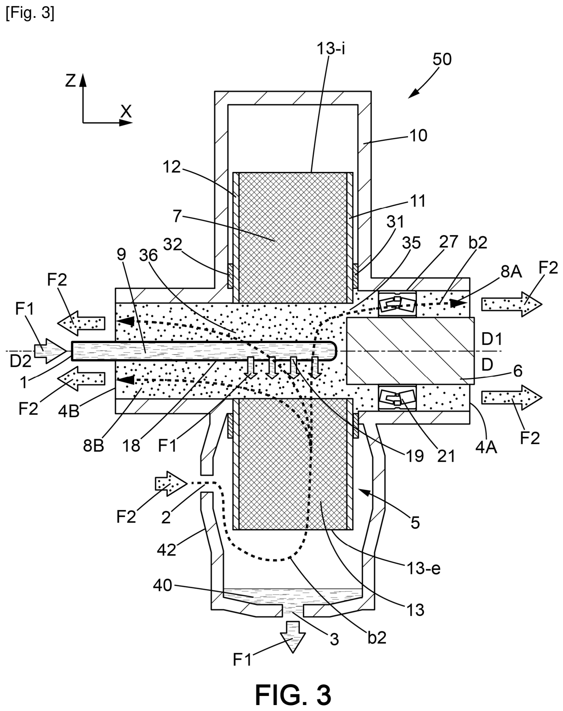

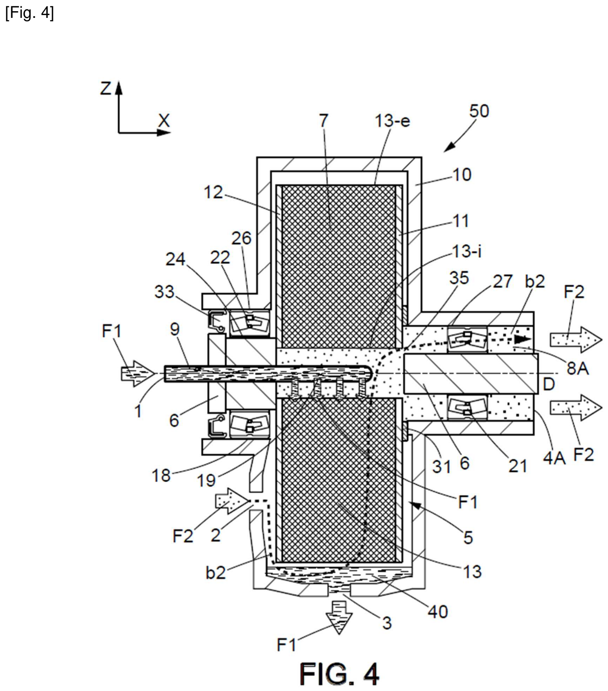

Selon le mode de réalisation de la figure 1 et selon les modes de réalisation des figures 3 et 4, la circulation du liquide F1 et du gaz F2 est à contre-courant.

La chambre de mélange 13 est ainsi configurée pour permettre une circulation du deuxième fluide F2 depuis le bord radialement externe 13-e vers le bord radialement interne 13-i. Le premier fluide F1 et le deuxième fluide F2 ont ainsi des sens de déplacement opposés.

Selon le mode de réalisation de la figure 2, la circulation du liquide F1 et du gaz F2 est de type co-courant.
la chambre de mélange 13 est configurée pour permettre une circulation du deuxième fluide F2 depuis le bord radialement interne 13-i vers le bord radialement externe 13-e.

Le premier fluide F1 et le deuxième fluide F2 ont ainsi le même sens de déplacement à travers le lit de garnissage 7.

Selon le mode de réalisation de la figure 7, la circulation du liquide F1 et du gaz F2 est à courants croisés. Ce mode de réalisation sera décrit ultérieurement.

La figure 5 illustre détaille le contacteur rotatif 5.

Un bord radialement interne 35-i du au moins un orifice de passage 35 du premier flasque 11 est adjacent à l'arbre de rotation 6.

Le premier flasque 11 comprend ici un ensemble d'orifices de passage 35. Plus précisément, le premier flasque 11 comprend quatre orifices de passage 35.

Les orifices de passage 35 du premier flasque 11 sont régulièrement espacés.

Les orifices de passage 35 du premier flasque 11 sont disposés à la même distance du centre du premier flasque 11.

Les orifices de passage 35 du premier flasque 11 ont la même forme.

Les orifices de passage 35 du premier flasque 11 sont délimités latéralement par deux portions rectilignes 35r-1, 35r-2.

Les orifices de passage 35 du premier flasque 11 sont délimités radialement par deux portions en arc de cercle 35-i, 35-e.

Les deux portions en arc de cercle 35-i, 35-e ont le même centre, et ce centre coïncide avec le centre du premier flasque 11.

Chaque portion rectiligne 35r-1, 35r-2 s'étend radialement vers le centre du premier flasque 1.

Une première portion rectiligne 35r-1 relie une première extrémité de la portion en arc de cercle radialement interne 35i à une première extrémité de la portion en arc de cercle radialement externe 35e. La deuxième portion rectiligne 35r-2 relie la deuxième extrémité de la portion en arc de cercle radialement interne 35i à la deuxième extrémité de la portion en arc de cercle radialement externe 35e.

Le rayon de la portion en arc de cercle radialement interne 35i est sensiblement égal au rayon de l'arbre de rotation 6.

Dans l'exemple illustré, dans lequel le premier flasque 11 comprend quatre orifices de passage 35, chaque orifice de passage s'étend sur une plage angulaire comprise entre 60° et 80°.

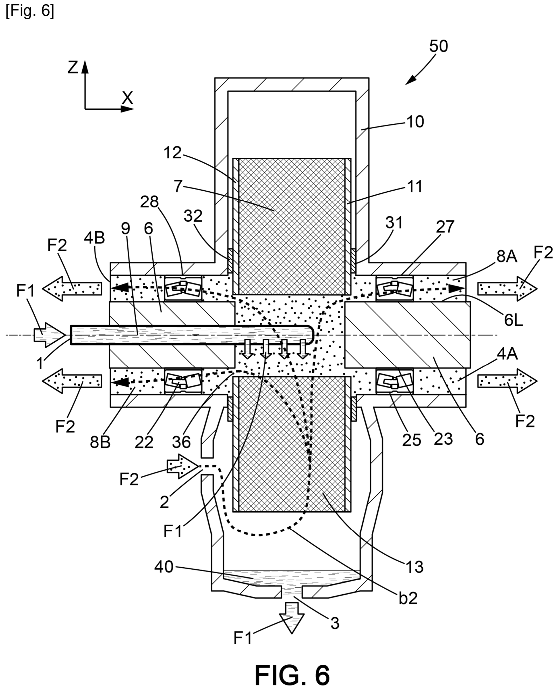

La figure 3 et la figure 6 schématisent des modes de réalisation dans lequel le dispositif à lit rotatif 50 comprend plus d'une sortie du deuxième fluide F2.

Le dispositif à lit rotatif 50 comporte ainsi :
- une troisième entrée/sortie 4B du deuxième fluide F2,
- un deuxième canal de circulation 8B configuré pour faire circuler le deuxième fluide F2 du lit de garnissage 7 vers la troisième entrée/sortie 4B du deuxième fluide F2, ou pour faire circuler le deuxième fluide F2 de la troisième entrée/sortie 4B vers le lit de garnissage 7.

La présence d'un deuxième canal de circulation 8B permet d'augmenter la section de passage du deuxième fluide F2, et donc de réduire encore la perte de charge. Pour un même encombrement, le débit maximal du dispositif à lit rotatif 50 peut être augmenté.

La troisième entrée/sortie 4B du deuxième fluide F2 joue le même rôle que la deuxième entrée/sortie 4A.

En d'autres termes, selon le mode de réalisation de la figure 3 et selon celui de la figure 5, la deuxième entrée/sortie 4A et la troisième entrée/sortie 4B sont conjointement des sorties du deuxième fluide F2.

Selon un mode de réalisation, non représenté, la deuxième entrée/sortie 4A et la troisième entrée/sortie 4B sont conjointement des entrées du deuxième fluide F2.

Le premier canal de circulation 8A du deuxième fluide F2 et le deuxième canal de circulation 8B du deuxième fluide F2 sont en communication fluidique.

Selon le mode de réalisation de la figure 6, le dispositif à lit rotatif 50 comporte un deuxième logement 28 de réception de l'arbre de rotation 6,
et le deuxième canal de circulation 8B du deuxième fluide F2 est disposé dans un espace radialement externe à l'arbre de rotation 6 et radialement interne au deuxième logement 28 de réception de l'arbre de rotation 6 du contacteur rotatif 5.

Selon ce mode de réalisation, le deuxième flasque 12 comprend au moins un orifice de passage 36 configuré pour permettre un passage de fluide entre le lit de garnissage 7 et le deuxième canal de circulation 8B du deuxième fluide F2.

Le deuxième canal de circulation 8B du deuxième fluide F2 est de forme cylindrique. Le deuxième canal de circulation 8B du deuxième fluide F2 s'étend selon un axe D2.

Ledit au moins un canal de circulation 8A est désigné par le terme 'premier canal de sortie'. Le premier canal de circulation 8A et le deuxième canal de circulation 8B sont disposés selon une direction axiale de part et d'autre de la chambre de mélange 13.

Le premier canal de circulation 8A et le deuxième canal de circulation 8B sont coaxiaux. Le premier canal de circulation 8A et le deuxième canal de circulation 8B peuvent avoir le même diamètre.

Selon le mode de réalisation de la figure 3, l'arbre de rotation 6 s'étend axialement d'un seul côté de la chambre de mélange 13.

Le dispositif à lit rotatif 50 comporte au moins un distributeur 9 du premier fluide F1, permettant d'introduire le premier fluide F1 dans le contacteur rotatif 5.

Afin de simplifier les figures, le distributeur 9 n'a pas été représenté sur les figures 1 et 2.

Comme schématisé sur les figures 3 et 4, ainsi que sur les figures 6 à 8, le au moins un distributeur 9 comprend une portion tubulaire 18.

La portion tubulaire 18 dudit au moins un distributeur 9 et l'arbre de rotation 6 du contacteur rotatif 5 sont coaxiaux.

Le au moins un distributeur 9 comprend au moins un orifice de passage 19 du premier fluide F1.

Selon l'exemple illustré, le au moins un distributeur 9 comprend un ensemble d'orifices de passage 19 du premier fluide F1.

Le au moins un distributeur 9 comprend une portion tubulaire 18.

Le au moins un orifice de passage 19 du premier fluide F1 est formé dans une paroi latérale de la portion tubulaire 18.

Le au moins un orifice de passage 19 est disposé en vis-à-vis du lit de garnissage 7 selon une direction radiale.

Le premier fluide F1 sort du au moins un distributeur 9 par les orifices de passage 19, et rejoint le lit de garnissage 7 du contacteur rotatif 5.

Les orifices de passage 19 sont décalés axialement le long de la portion tubulaire 18 du distributeur 9.

Les orifices de passage 19 sont décalés angulairement sur une partie de la surface latérale de la portion tubulaire 18.

Le distributeur 9 peut comprendre plusieurs rangées d'orifices de passage 19. Chaque rangée peut comprendre plusieurs orifices de passage décalés axialement le long de la portion tubulaire.

Les rangées sont réparties à intervalle angulaire régulier sur la portion tubulaire. Chaque rangée forme une génératrice de la portion tubulaire.

Par exemple, le distributeur 9 comprend neuf rangées d'orifices de passage, réparties avec un intervalle de 40° sur l'ensemble de la périphérie de la portion tubulaire. Chaque rangée comprend par exemple trois orifices de passage.

L'espacement entre le premier et le deuxième orifice d'une rangée est le même que l'espacement entre le deuxième orifice et le troisième orifice de cette rangée.

Selon le mode de réalisation de la figure 4, le dispositif à lit rotatif 50 comporte au moins un distributeur 9 du premier fluide F1, configuré pour faire passer le premier fluide F1 de l'entrée 1 du premier fluide F1 au lit de garnissage 7, et une portion dudit au moins un distributeur 9 du premier fluide F1 est disposée à l'intérieur de l'arbre de rotation 6 du contacteur rotatif 5.

L'arbre de rotation 6 est creux sur une partie de sa longueur, et forme un logement de réception d'une portion du distributeur 9.

Selon l'exemple illustré, l'extrémité de la portion tubulaire 18 du au moins un distributeur 9 du premier fluide F1 est fermée.

Selon une variante non représentée, l'extrémité de la portion tubulaire 18 du au moins un distributeur 9 du premier fluide F1 est ouverte.

Le nombre de distributeurs du dispositif à lit rotatif 50 peut varier.

Selon une variante non représentée, le dispositif à lit rotatif 50 comprend deux distributeurs. Les deux distributeurs sont par exemple disposés parallèlement l'un à l'autre à l'intérieur du contacteur rotatif 7. Les deux distributeurs peuvent être disposés de manière symétrique par rapport à l'axe D de l'arbre de rotation 6.

Chaque distributeur délivre une partie du débit total du premier fluide F1.

Plusieurs types de liaison mécanique entre l'arbre de rotation 6 du contacteur rotatif 5 sont possibles. En particulier, le nombre de paliers de guidage supportant l'arbre de rotation 6 diffère suivant les modes de réalisation.

Selon les modes de réalisation des figures 1 à 3, et selon le mode de réalisation de la figure 7, l'arbre de rotation 6 est configuré pour pivoter par rapport à l'enceinte 10 par l'intermédiaire d'un unique palier de guidage 21. L'unique palier de guidage 21 peut être un roulement.

Selon les modes de réalisation des figures 4 et 6, l'arbre de rotation 6 est configuré pour pivoter par rapport à l'enceinte 10 par l'intermédiaire d'au moins un premier palier de guidage 21 et d'un deuxième palier de guidage 22. Le premier palier de guidage 21 et le deuxième palier de guidage 22 peuvent être des roulements.

Selon le mode de réalisation de la figure 6, l'arbre de rotation 6 est configuré pour pivoter par rapport au deuxième logement 28 par l'intermédiaire d'un deuxième roulement 22 disposé dans le deuxième logement 28,
et le deuxième roulement 22 est disposé dans le deuxième canal de circulation 8B du deuxième fluide F2.

Le deuxième roulement 22 permet d'améliorer le guidage de l'arbre de rotation 6. Comme précédemment, le deuxième roulement peut notamment être un roulement à billes, ou un roulement à rouleaux, par exemple à deux rangées de billes, ou deux rangées de rouleaux.

Le deuxième logement 28, dans lequel le deuxième roulement 22 est disposé, est formé dans l'enceinte 10.

L'espace compris entre la surface latérale de l'arbre de rotation 6 et la surface interne du deuxième logement 28 est de forme annulaire.

L'espace compris entre la surface latérale externe de l'arbre de rotation 6 et la surface interne du deuxième logement 28 forme une portion du deuxième canal de circulation 8B.

Le premier roulement 21 et le deuxième roulement 22 sont disposés selon une direction axiale de part et d'autre de la chambre de mélange 13.

Le deuxième roulement 22 et le premier roulement 21 peuvent être identiques.

Le dispositif à lit rotatif 50 peut ainsi présenter une symétrie par rapport à un plan transverse à l'axe D de l'arbre de rotation 6. L'écoulement du deuxième fluide F2 est facilité.

Le deuxième roulement 22 comprend :
- une bague intérieure 24 dans laquelle l'arbre de rotation 6 est disposé,
- une bague extérieure 26 disposée dans le deuxième logement 28,
et une portion du deuxième canal de circulation 8B s'étend radialement entre l'arbre de rotation 6 et le deuxième logement 28.

La bague intérieure 24 du deuxième roulement 22 est fixe par rapport à l'arbre de rotation 6.

La bague extérieure 26 du deuxième roulement 22 est fixe par rapport à la paroi interne du deuxième logement 28 de l'enceinte 10.

Le deuxième canal de circulation 8B du deuxième fluide F2 est coaxial avec l'arbre de rotation 6.

Le premier canal de circulation 8A du deuxième fluide F2 et le deuxième canal de circulation 8B du deuxième fluide F2 sont ainsi co-axiaux.

Selon le mode de réalisation de la figure 4 et selon celui de la figure 6, le deuxième flasque 12 est solidaire de l'arbre de rotation 6.

L'arbre de rotation 6 comprend deux portions disjointes et décalées l'une de l'autre selon une direction axiale. Les deux portions sont séparées par les flasques 11,12 et par la chambre de mélange 13. Les deux portions de l'arbre de rotation 6 peuvent avoir le même diamètre.

Le au moins un orifice de passage 36 du deuxième flasque 12 débouche dans le deuxième canal de circulation 8B du deuxième fluide F2.

Le deuxième orifice de passage 36 est en vis-à-vis, selon une direction axiale, avec le deuxième canal de circulation 8B du deuxième fluide F2.

Un bord radialement interne du au moins un orifice de passage 36 du deuxième flasque 12 est adjacent à l'arbre de rotation 6.

Les orifices de passage 36 du deuxième flasque 12 peuvent avoir la même forme que les orifices de passage 35 du premier flasque 11.

Les orifices de passage 36 du deuxième flasque 12 peuvent avoir la même surface de passage que les orifices de passage 35 du premier flasque 11.

Le premier flasque 11 et le deuxième flasque 12 peuvent être symétriques l'un de l'autre.

La figure 7 schématise un mode de réalisation dans lequel la circulation du premier fluide F1 et du deuxième fluide F2 est à courants croisés.

Selon ce mode de réalisation, le contacteur rotatif 5 comprend :
- un premier flasque 11 et un deuxième flasque 12, le premier flasque 11 et le deuxième flasque 12 s'étendant transversalement à l'arbre de rotation 6 à distance l'un de l'autre, le premier flasque 11 étant solidaire de l'arbre de rotation 6,
- une chambre de mélange 13 délimitée selon une direction axiale par les deux flasques 11,12,
le lit de garnissage 7 étant disposé dans la chambre de mélange 13.

Le premier flasque 11 comprend au moins un orifice de passage 37 configuré pour permettre un passage de fluide entre la au moins une première entrée/sortie 2 du deuxième fluide F2 et le lit de garnissage 7, et

le deuxième flasque 12 comprend au moins un orifice de passage 38 configuré pour permettre un passage de fluide entre le lit de garnissage 7 et ledit au moins un canal de circulation 8A du deuxième fluide F2.

Plus précisément, le premier flasque 11 comprend un ensemble d'orifices de passage 37, et le deuxième flasque 12 comprend un ensemble d'orifices de passage 38.

L'ensemble d'orifices de passage 37 du premier flasque 11 est disposé sur une première surface latérale du lit de garnissage 7. L'ensemble d'orifices de passage 38 du deuxième flasque 12 est disposé sur une deuxième surface latérale du lit de garnissage 7, opposé à la première surface latérale.

La circulation du deuxième fluide F2 est de type à courants croisés.

En effet, la circulation du premier fluide F1 est identique à celle des autres modes de réalisation, c'est-à-dire que le premier fluide F1 circule radialement depuis la au moins une sortie 19 du distributeur 9 vers le bord périphérique extérieur du contacteur rotatif 5.

Le dispositif à lit rotatif 5 comprend deux entrées distinctes 2A, 2B du deuxième fluide F2. Les deux entrées 2A, 2B sont en vis du vis du premier flasque 11.

La circulation du deuxième fluide F2 est axiale, c'est-à-dire que le deuxième fluide F2 est admis dans le contacteur rotatif 5 par une première face latérale du contacteur rotatif 5, et ressort du contacteur rotatif 5 par la deuxième face latérale du contacteur rotatif 5, opposée à la première face latérale.

Le deuxième fluide F2 sortant du contacteur rotatif 5 s'écoule dans le volume compris entre la paroi interne de l'enceinte 10 et la surface latérale du contacteur rotatif 5, et rejoint le canal de circulation 8A, qui est ici un canal de sortie.

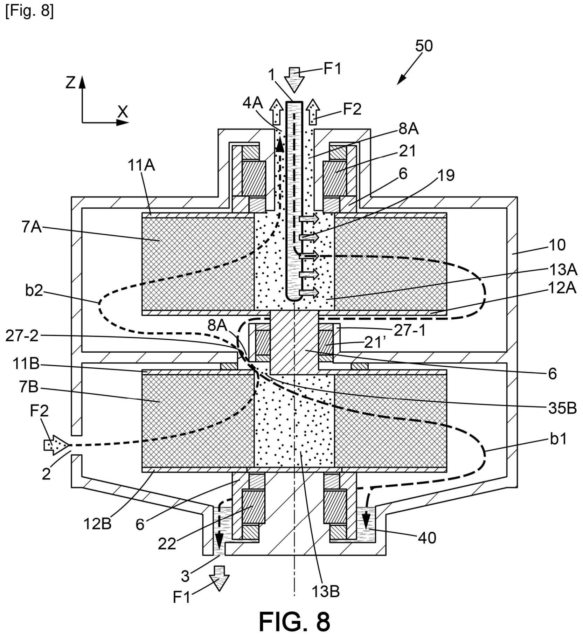

La figure 8 schématise un mode de réalisation dans lequel le dispositif à lit rotatif 50 comprend deux lits de garnissage étagés.

Selon ce mode de réalisation du dispositif à lit rotatif 50, le contacteur rotatif 5 comprend :
- un arbre de rotation 6,
- un premier lit de garnissage 7A solidaire de l'arbre de rotation 6, configuré pour permettre un transfert de matière ou un transfert de chaleur entre le premier fluide F1 et le deuxième fluide F2,
- un deuxième lit de garnissage 7B solidaire de l'arbre de rotation 6, configuré pour permettre un transfert de matière ou un transfert de chaleur entre le premier fluide F1 et le deuxième fluide F2,
   une sortie du premier lit de garnissage 7A étant configurée pour fournir un débit du premier fluide F1 au deuxième lit de garnissage 7B,
   une sortie du deuxième lit de garnissage 7B étant configurée pour fournir un débit du deuxième fluide F2 au premier lit de garnissage 7A,
- un premier canal de circulation 8A du deuxième fluide F2, configuré pour faire circuler le deuxième fluide F2 du premier lit de garnissage 7A vers la deuxième entrée/sortie 4A du deuxième fluide F2,
- un deuxième canal de circulation 8B du deuxième fluide F2, configuré pour faire circuler le deuxième fluide F2 du deuxième lit de garnissage 7B vers le premier lit de garnissage 7A,
- au moins un logement 27 de réception de l'arbre de rotation 6,
dans lequel ledit au moins un deuxième canal de circulation 8B du deuxième fluide F2 est disposé dans un espace radialement externe à l'arbre de rotation 6 et radialement interne au logement 27 de réception de l'arbre de rotation 6 du contacteur rotatif 5.

Le contacteur rotatif 5 comprend un premier lit de garnissage 7A et un deuxième lit de garnissage 7B rigidement lié au premier lit de garnissage 7A. Le premier lit de garnissage 7A est maintenu par deux flasques 11A, 11B. Le deuxième lit de garnissage 7B est maintenu par deux flasques 12A, 12B.

Le flasque 12A du premier lit de garnissage 7A est relié au flasque 11B du deuxième lit de garnissage 7B par une portion de l'arbre de rotation 6.

Le flasque 11B du deuxième lit de garnissage 7B comprend au moins une ouverture de passage 35B, de préférence un ensemble d'ouvertures de passage 35B.

Le premier lit de garnissage 7A et le deuxième lit de garnissage 7B peuvent avoir les mêmes dimensions.

Le premier fluide F1 sort des orifices 19 du distributeur 9, circule dans le premier lit de garnissage 7A et ressort par la périphérie du premier lit de garnissage 7A. Le premier fluide F1 rejoint ensuite le deuxième lit de garnissage 7B, en passant par les orifices de passage 35B du flasque 11B. Le premier fluide F1 circule ensuite dans le deuxième lit de garnissage 7B, et rejoint la sortie 3.

Le deuxième fluide F2 est admis par l'entrée 2, traverse le deuxième lit de garnissage 7B et ressort par les ouvertures de passage 35B. Le deuxième fluide F2 circule dans l'espace radialement compris entre l'arbre de rotation 6 et le logement 27, cet espace formant une portion d'un canal de circulation 8A. Plus précisément, l'arbre de rotation 6 est supporté, dans sa partie reliant le premier lit de garnissage 7A au deuxième lit de garnissage 7B, par un palier intermédiaire 21'.

Le logement 27 comprend une première paroi 27-1 dans laquelle le palier intermédiaire de guidage 21' est reçu, et une deuxième paroi 27-2 radialement externe à la première paroi 27-1, entourant l'arbre 6.

Le canal de circulation 8A du deuxième fluide F2 est disposé en partie dans un espace radialement externe à la première paroi 27-1 et radialement interne à la deuxième paroi 27-2. Autrement dit, une portion du canal 8A de circulation du deuxième fluide F2 est ici formé par l'espace compris entre la paroi 27-1 recevant le palier intermédiaire 21' et la paroi 27-2 entourant l'arbre de rotation 6 et la première paroi 27-1. Cette portion permet le passage du deuxième fluide F2 du deuxième lit de garnissage 7B au premier lit de garnissage 7A. Le deuxième fluide F2 rejoint ensuite le bord périphérique externe du premier lit de garnissage 7A, circule dans le deuxième lit de garnissage 7A, et sort par la sortie 4A. La sortie 4A est ici radialement interne à l'arbre de rotation 6, qui est creux dans sa partie supérieure. La partie supérieure du canal de circulation 8A est ainsi disposée à l'intérieur de l'arbre de rotation 6.

Le dispositif à lit rotatif 50 comprend un ensemble de joints d'étanchéité.

Selon les modes de réalisation illustrés sur les figures 1 à 4, ainsi que sur le mode de réalisation de la figure 6, le dispositif à lit rotatif 50 comprend un premier joint d'étanchéité 31 disposé selon une direction axiale entre le premier flasque 11 du contacteur rotatif 5 et l'enceinte 10.

Le premier joint d'étanchéité 31 entoure le au moins un canal de circulation 8A.

Le premier joint d'étanchéité 31 isole le au moins un canal de circulation 8A de la partie de l'enceinte 10 comprise à l'extérieur du contacteur rotatif 5.

Selon les modes de réalisation illustrés sur les figures 1 à 3, le dispositif à lit rotatif 50 comprend un deuxième joint d'étanchéité 32 disposé selon une direction axiale entre le deuxième flasque 12 du contacteur rotatif 5 et l'enceinte 10.

Dans le cas du troisième mode de réalisation, illustré sur la figure 3, le deuxième joint d'étanchéité 32 entoure le deuxième canal de sortie 8B.

Le deuxième joint d'étanchéité 32 isole le deuxième canal de sortie 8B de la partie de l'enceinte 10 comprise à l'extérieur du contacteur rotatif 5.

Le premier joint d'étanchéité 31 et le deuxième joint d'étanchéité 32 ont une forme annulaire.

Le premier joint d'étanchéité 31 et le deuxième joint d'étanchéité 32 réalisent une étanchéité dynamique entre les flasques 11,12 du contacteur rotatif 5 et l'enceinte 10, afin d'éviter que les fluides compris entre les flasques 11,12 du contacteur rotatif 5 et les parois internes de l'enceinte 10 rejoignent les canaux de circulation 8A,8B, qui sont alors des canaux de sortie, sans passer par les orifices 35,36 des flasques 11,12.

Selon le quatrième mode de réalisation, illustré sur la figure 4, le dispositif à lit rotatif 50 comprend un troisième joint d'étanchéité 33 disposé radialement entre une portion de l'arbre de rotation 6 et une partie de l'enceinte 10.

Le troisième joint d'étanchéité 33 isole le contacteur rotatif 5 de l'extérieur de l'enceinte 10. Le troisième joint d'étanchéité 33 réalise une étanchéité dynamique entre l'arbre de rotation 6 du contacteur rotatif 5 et l'enceinte 10. Le troisième joint d'étanchéité 33 évite que le premier fluide F1 et le deuxième fluide F2 sortent de l'enceinte 10 en passant par le deuxième roulement 22.

Dans le mode de réalisation de la figure 7, un joint d'étanchéité 32' est disposé entre le premier flasque 11 et l'enceinte 10, au niveau du bord radialement interne du premier flasque 11.

Un joint d'étanchéité 34A est disposé entre le premier flasque 11 et l'enceinte 10, au niveau du bord radialement externe du premier flasque 11.

Un joint d'étanchéité 34B est disposé entre le deuxième flasque 12 et l'enceinte 10, au niveau du bord radialement externe du deuxième flasque 12.

Les joints d'étanchéité 34A, 34B évitent que le deuxième fluide F2 puisse passer d'une des entrées 2A, 2B à la deuxième entrée/sortie 4A sans circuler dans le lit de garnissage 7 du contacteur rotatif 5.

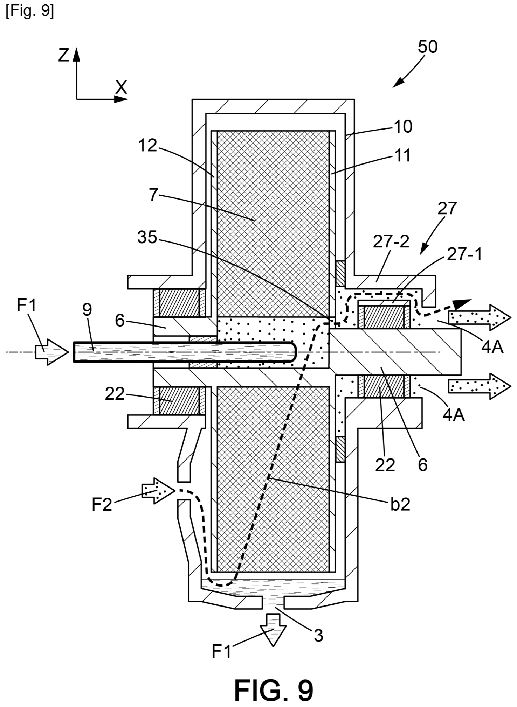

La figure 9 représente un mode de réalisation dans lequel le canal de circulation 8A du deuxième fluide F2 contourne un palier de guidage 21 de l'arbre de rotation 6.

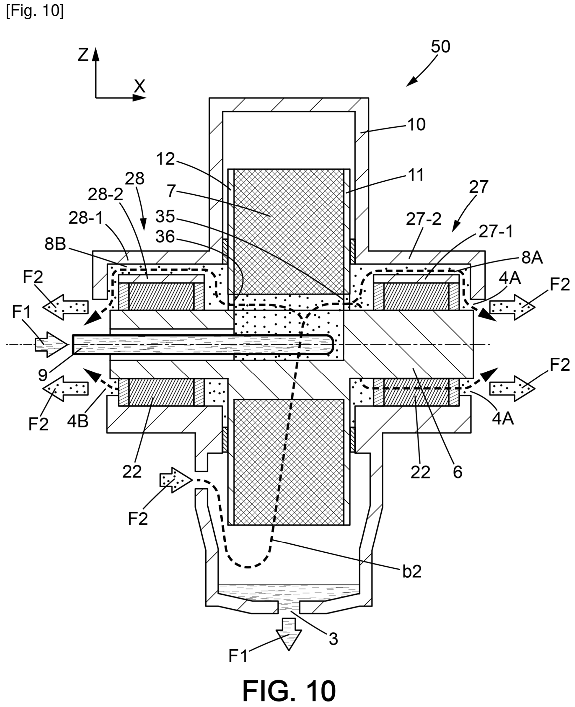

La figure 10 représente une variante du mode de réalisation de la figure 9, dans laquelle le dispositif à lit rotatif 50 comprend deux canaux de circulation 8A, 8B du deuxième fluide F2 et deux sorties 4A, 4B, chaque canal de circulation 8A, 8B contournant respectivement un palier de guidage 21, 22 de l'arbre de rotation 6.

Selon le mode de réalisation de la figure 9, le logement 27 comprend une première paroi 27-1 formant logement de maintien d'un palier de guidage 21 de l'arbre de rotation 6 et une deuxième paroi 27-2 radialement externe à la première paroi 27-1.

Ledit au moins un canal de circulation 8A du deuxième fluide F2 est disposé en partie dans un espace radialement externe à la première paroi 27-1 du logement 27 et radialement interne à la deuxième paroi 27-2 du logement 27.

Autrement dit, le canal de circulation 8A du deuxième fluide F2 est disposé entre la première paroi 27-1 permettant de maintenir le palier de guidage de l'arbre, et la deuxième paroi 27-2, qui entoure l'arbre de rotation 6, le palier de guidage 21, et la première paroi 27-1. La deuxième paroi 27-2 est plus éloignée de l'axe de l'arbre de rotation 6 que la première paroi 27-1, et l'espace libre séparant les deux parois forme une partie du canal de circulation 8A.

Chaque extrémité axiale du palier de guidage comprend un joint d'étanchéité. Le palier de guidage 21 n'est ainsi pas en contact avec le deuxième fluide F2.

Une première face de la première paroi 27-1, radialement interne, est en contact avec le palier 21. Une deuxième face de la première paroi 27-1, opposée à la première face et radialement externe, délimite un bord radialement interne du canal de circulation 8A.

Une face de la deuxième paroi 27-2, disposée en vis-à-vis de la deuxième face de la première paroi 27-1, délimite un bord radialement externe du canal de circulation 8A.

Le deuxième fluide F2 s'écoule parallèlement à l'axe de l'arbre de rotation 6, sur une partie du canal de circulation 8A.

Ce mode de réalisation permet d'éviter la mise en contact des éléments du palier de guidage 21 avec un fluide corrosif, lorsque le deuxième fluide F2 est corrosif.

Dans le mode de réalisation de la figure 9, le dispositif à lit rotatif comprend une seule sortie 4A, et deux paliers de guidage 21, 22 disposés axialement le long de l'arbre de rotation 6 de part et d'autre de la chambre de mélange 13.

Dans le mode de réalisation de la figure 10, le dispositif à lit rotatif 50 comprend un deuxième logement 28 de réception de l'arbre de rotation 6 et une deuxième sortie 8B du deuxième fluide F2.

Le deuxième logement 28 comprend une première paroi 28-1 formant logement de maintien d'un deuxième palier de guidage 22 de l'arbre de rotation 6 et une deuxième paroi 28-2 radialement externe à la première paroi 28-1, et

le deuxième canal de circulation 8B du deuxième fluide F2 est disposé en partie dans un espace radialement externe à la première paroi 28-1 du deuxième logement 28 et radialement interne à la deuxième paroi 28-2 du deuxième logement 28.

La réalisation du deuxième canal de circulation 8B est ainsi analogue à ce qui a été décrit pour le premier canal 8A.

La présence d'une deuxième sortie 8B permet de réduire la perte de charge subie par le deuxième fluide F2, en particulier la perte de charge de la portion de circuit comprise entre le bord interne du lit de garnissage 7 et chaque sortie 8A, 8B.

L'orientation spatiale du contacteur rotatif 5 peut varier suivant les modes de réalisation.

Selon les modes de réalisation des figures 1 à 4, ainsi que selon le mode de réalisation de la figure 6, l'arbre de rotation 6 est orienté selon une direction horizontale X. On entend que l'axe de l'arbre de rotation 6 est horizontal lorsque le dispositif à lit rotatif 50 est dans une position nominale de fonctionnement.

La au moins une première entrée/sortie 2 du deuxième fluide F2 est disposée sur une face latérale 42 de l'enceinte 10.

La sortie 3 du premier fluide F1 et la au moins une deuxième entrée/sortie 4A du deuxième fluide F2 s'étendent dans des plans perpendiculaires.

La sortie 3 du premier fluide F1 est disposée dans une portion inférieure de l'enceinte 10.

Une portion inférieure de l'enceinte 10 forme un volume de collecte 40 du premier fluide F1. Le volume de collecte 40 forme une zone d'accumulation de liquide. Le volume de collecte 40 communique avec la sortie 3 du premier fluide F1.

La au moins une première entrée/sortie 2 du deuxième fluide F2 est disposée dans une portion de l'enceinte 10 en vis d'un flasque 11 du contacteur rotatif 5.

Selon les modes de réalisation des figures 7 et 8, l'arbre de rotation 6 est orienté selon une direction verticale Z.

Selon des variantes non représentées, l'arbre de rotation 6 peut former un angle quelconque avec l'axe vertical.

Autrement dit, l'arbre de rotation 6 peut être orienté selon n'importe orientation comprise entre une orientation verticale et une orientation horizontale.

D'autres modes de réalisation et variantes, non représentés, peuvent être réalisés. En particulier, le dispositif à lit rotatif peut comprendre plusieurs sorties du premier fluide F1.

Le dispositif à lit rotatif peut comprendre plus de deux lits de garnissage.

Le dispositif à lit rotatif peut comprendre deux distributeurs, par exemple deux distributeurs disposés parallèlement l'un à l'autre.

Le dispositif à lit rotatif de la figure 9 et celui de la figure 10 peut être orienté verticalement, en adaptant la disposition de la sortie 3 du premier fluide F1.

## Revendications

1. Dispositif à lit rotatif (50), comportant :
- au moins une entrée (1) d'un premier fluide (F1),
- au moins une première entrée/sortie (2) d'un deuxième fluide (F2),
- au moins une sortie (3) du premier fluide (F1),
- au moins une deuxième entrée/sortie (4A) du deuxième fluide (F2),
- un contacteur rotatif (5), comprenant :
-- un arbre de rotation (6),
-- un lit de garnissage (7) solidaire de l'arbre de rotation (6), configuré pour permettre un transfert de matière ou un transfert de chaleur entre le premier fluide (F1) et le deuxième fluide (F2),
- au moins un canal de circulation (8A) du deuxième fluide (F2), configuré pour faire circuler le deuxième fluide (F2) du lit de garnissage (7) vers ladite au moins une deuxième entrée/sortie (4A) du deuxième fluide (F2) ou pour faire circuler le deuxième fluide (F2) de ladite au moins une deuxième entrée/sortie (4A) du deuxième fluide (F2) vers le lit de garnissage (7),
- au moins un logement (27) de réception de l'arbre de rotation (6),
dans lequel ledit au moins un canal de circulation (8A) du deuxième fluide (F2) est disposé dans un espace radialement externe à l'arbre de rotation (6) et radialement interne au logement (27) de réception de l'arbre de rotation (6) du contacteur rotatif (5).

2. Dispositif à lit rotatif (50) selon la revendication 1, dans lequel l'arbre de rotation (6) est configuré pour pivoter par rapport au logement (27) par l'intermédiaire d'au moins un roulement (21) disposé dans le logement (27),
et dans lequel ledit au moins un roulement (21) est disposé dans ledit au moins un canal de circulation (8A) du deuxième fluide (F2).

3. Dispositif à lit rotatif (50) selon la revendication 1, dans lequel le logement (27) comprend une première paroi (27-1) formant logement de maintien d'un palier de guidage (21) de l'arbre de rotation (6) et une deuxième paroi (27-2) radialement externe à la première paroi (27-1), et
dans lequel ledit au moins un canal de circulation (8A) du deuxième fluide (F2) est disposé en partie dans un espace radialement externe à la première paroi (27-1) du logement (27) et radialement interne à la deuxième paroi (27-2) du logement (27).

4. Dispositif à lit rotatif (50) selon l'une des revendications précédentes, dans lequel le contacteur rotatif (5) comprend :
- un premier flasque (11) et un deuxième flasque (12), le premier flasque (11) et le deuxième flasque (12) s'étendant transversalement à l'arbre de rotation (6) à distance l'un de l'autre, le premier flasque (11) étant solidaire de l'arbre de rotation (6),
- une chambre de mélange (13) délimitée selon une direction axiale par les deux flasques (11,12),
le lit de garnissage (7) étant disposé dans la chambre de mélange (13),
dans lequel le premier flasque (11) comprend au moins un orifice de passage (35) configuré pour permettre un passage de fluide entre le lit de garnissage (7) et ledit au moins un canal de circulation (8A) du deuxième fluide (F2).

5. Dispositif à lit rotatif (50) selon l'une des revendications précédentes, comportant :
- une troisième entrée/sortie (4B) du deuxième fluide (F2),
- un deuxième canal de circulation (8B) configuré pour faire circuler le deuxième fluide (F2) du lit de garnissage (7) vers la troisième entrée/sortie (4B) du deuxième fluide (F2), ou pour faire circuler le deuxième fluide (F2) de la troisième entrée/sortie (4B) vers le lit de garnissage (7).

6. Dispositif à lit rotatif (50) selon la revendication précédente en combinaison avec la revendication 4,
dans lequel le deuxième flasque (12) comprend au moins un orifice de passage (36) configuré pour permettre un passage de fluide entre le lit de garnissage (7) et le deuxième canal de circulation (8B) du deuxième fluide (F2).

7. Dispositif à lit rotatif (50) selon la revendication précédente, comportant un deuxième logement (28) de réception de l'arbre de rotation (6),
dans lequel le deuxième canal de circulation (8B) du deuxième fluide (F2) est disposé dans un espace radialement externe à l'arbre de rotation (6) et radialement interne au deuxième logement (28) de réception de l'arbre de rotation (6) du contacteur rotatif (5).

8. Dispositif à lit rotatif (50) selon la revendication 7 en combinaison avec la revendication 2, dans lequel l'arbre de rotation (6) est configuré pour pivoter par rapport au deuxième logement (28) par l'intermédiaire d'un deuxième roulement (22) disposé dans le deuxième logement (28),
et dans lequel le deuxième roulement (22) est disposé dans le deuxième canal de circulation (8B) du deuxième fluide (F2).

9. Dispositif à lit rotatif (50) selon la revendication précédente, dans lequel le premier roulement (21) et le deuxième roulement (22) sont disposés selon une direction axiale de part et d'autre de la chambre de mélange (13).

10. Dispositif à lit rotatif (50) selon la revendication 7 , dans lequel le deuxième logement (28) comprend une première paroi (28-1) formant logement de maintien d'un deuxième palier de guidage (22) de l'arbre de rotation (6) et une deuxième paroi (28-2) radialement externe à la première paroi (28-1), et
dans lequel le deuxième canal de circulation (8B) du deuxième fluide (F2) est disposé en partie dans un espace radialement externe à la première paroi (28-1) du deuxième logement (28) et radialement interne à la deuxième paroi (28-2) du deuxième logement (28).

11. Dispositif à lit rotatif (50) selon l'une des revendications précédentes en combinaison avec la revendication 4, dans lequel le deuxième flasque (12) est solidaire de l'arbre de rotation (6).

12. Dispositif à lit rotatif (50) selon l'une des revendications précédentes, dans lequel le contacteur rotatif (5) comprend :
- un premier flasque (11) et un deuxième flasque (12), le premier flasque (11) et le deuxième flasque (12) s'étendant transversalement à l'arbre de rotation (6) à distance l'un de l'autre, le premier flasque (11) étant solidaire de l'arbre de rotation (6),
- une chambre de mélange (13) délimitée selon une direction axiale par les deux flasques (11,12),
le lit de garnissage (7) étant disposé dans la chambre de mélange (13),
dans lequel :
- le premier flasque (11) comprend au moins un orifice de passage (37) configuré pour permettre un passage de fluide entre la au moins une première entrée/sortie (2) du deuxième fluide (F2) et le lit de garnissage (7), et
- le deuxième flasque (12) comprend au moins un orifice de passage (38) configuré pour permettre un passage de fluide entre le lit de garnissage (7) et ledit au moins un canal de circulation (8A) du deuxième fluide (F2).

13. Dispositif à lit rotatif (50) selon l'une des revendications précédentes, comportant un distributeur (9) du premier fluide (F1), configuré pour faire passer le premier fluide (F1) de l'entrée (1) du premier fluide (F1) au lit de garnissage (7), dans lequel une portion du distributeur (9) du premier fluide (F1) est disposée à l'intérieur de l'arbre de rotation (6) du contacteur rotatif (5).

14. Dispositif à lit rotatif (50) selon la revendication précédente, dans lequel le distributeur (9) comprend une portion tubulaire (18), et
dans lequel la portion tubulaire (18) du distributeur (9) et l'arbre de rotation (6) du contacteur rotatif (5) sont coaxiaux.

15. Procédé de mise en œuvre du dispositif à lit rotatif selon l'une des revendications précédentes, **caractérisé en ce qu'**on transfère de la matière et/ou de la chaleur d'un des deux fluides vers l'autre fluide, les deux fluides étant notamment tous deux liquides ou l'un étant liquide et l'autre gazeux.
